# EUROPEAN PATENT SPECIFICATION

(11) **EP 2 109 279 B1**
(45) Date of publication and mention of the grant of the patent: **12.05.2010**
(21) Application number: 08154389.4
(22) Date of filing: 11.04.2008
(51) Int. Cl.: H04L 29/06

(54) **Method and system for mitigation of distributed denial of service attacks using geographical source and time information**
Verfahren und System zur Abschwächung verteilter Dienstverweigerungsangriffe mittels Daten zum geographischen Ursprung und Zeitdaten
Procédé et système pour la réduction d'attaques distribuées de refus de service utilisant des informations de source géographique et de temps

(43) Date of publication of application: 14.10.2009
(73) Proprietor: Deutsche Telekom AG, 53113 Bonn (DE)
(72) Inventor: Roshandel, Mehran, 13591 Berlin (DE); Goldstein, Markus, 67655 Kaiserslautern (DE); Reif, Matthias, 67663 Kaiserslautern (DE); Stahl, Armin, 67663 Kaiserslautern (DE); Breue, Thomas, 67655 Kaiserslautern (DE)
(74) Representative: Vossius & Partner

(56) References cited:
- US-A1- 2006 010 389
- GARY PACK ET AL: "On Filtering of DDoS Attacks Based on Source Address Prefixes" SECURECOMM AND WORKSHOPS, 2006, IEEE, PI, 1 August 2006 (2006-08-01), pages 1-12, XP031087469 ISBN: 978-1-4244-0422-3
- MIRKOVIC J ET AL: "A TAXONOMY OF DDOS ATTACK AND DDOS DEFENSE MECHANISMS" 1 April 2004 (2004-04-01), COMPUTER COMMUNICATION REVIEW, ACM, NEW YORK, NY, US, PAGE(S) 39 - 53 , XP001224616 ISSN: 0146-4833 * page 50, left-hand column, paragraph 4 *
- MAHAJAN R ET AL: "CONTROLLING HIGH BANDWIDTH AGGREGATES IN THE NETWORK" COMPUTER COMMUNICATION REVIEW, ACM, NEW YORK, NY, US, vol. 32, no. 3, 1 July 2002 (2002-07-01), pages 62-73, XP001133032 ISSN: 0146-4833

## Description

### Field of the Invention

The invention generally relates to mitigation of Distributed Denial of Service (DDoS) attacks on public available Internet services. Examples of such services include websites, Internet telephony (VoIP), FTP server, DNS, etc.

### Background of the Invention

In the Internet, Distributed Denial of Service attacks (DDoS) have become a major threat today. Large scaled networks of infected PCs (bots or zombies) combine their bandwidth and computational power in order to overload a publicly available service and denial it for legal users. All public servers are basically vulnerable to DDoS attacks due to the open structure of the Internet. The bots are usually acquired automatically by hackers who use software tools to scan through the network, detecting vulnerabilities and exploiting the target machine.

The number of such DDoS incidents is steadily increasing. For example, the attacks against large e-commerce sites in February 2000 and the attacks against root DNS servers in 2003 and 2007 have drawn public attention to the problem of DDoS attacks. Today, mainly mid-sized websites are attacked by criminals in order to extort protection money from their owners without attracting too much public attention. Besides that, also Internet Service Providers (ISP) have to deal with the problem that DDoS traffic is congesting their link bandwidths.

The bot software also evolved alarmingly over time. Early tools like *TFN, Stacheldraht, Trinoo* or *Mstream* used unencrypted and hierarchically organized communication structures. Most of these tools used TCP-SYN, UDP or ICMP floods with possibly identifiable parameters. Since some of these attacks have successfully been mitigated, a new generation of bots arose. *SDBot, Agobot* or the very enhanced *Phatbot* are known representatives which use IRC as a robust and secure communication. These tools also contain methods for spreading themselves and have more sophisticated attack algorithms, which could be upgraded over the Internet. The attack traffic from those tools looks like legal traffic on the transport layer, which makes it nearly impossible to filter it effectively with standard firewalls.

Mitigating DDoS attacks at the origin or within the core of the Internet seems to be an impossible task due to the distributed and authorization-free nature of the IP based network. Approaches to achieve this objective typically rely on changing current internet protocols and are therefore not easily applicable. Ingress filtering as described in RFC 2827 (P. Ferguson and D. Senie, "Network ingress filtering: Defeating denial of service attacks which employ IP source address spoofing," United States, 2000, available at: http://rfc.net/rfc2827.html.) also helps mitigating DDoS attacks with forged source IP addresses (IP spoofing) and should be applied by every ISP. Since ingress filtering only helps other ISPs on the Internet and not the one who is actually applying it, it took quite a long time until it was setup in many places. Furthermore, Savage et al. (S. Savage, D. Wetherall, A. R Karlin, and T. Anderson, "Practical network support for IP traceback," in SIGCOMM, 2000, pp. 295-306) suggested IP Traceback to find the source of spoofed IP addresses by probabilistically marking packets. Nowadays, IP spoofing is not that common any more in DDoS attacks, except for the last octet of an IP address.

A known system to mitigate attacks is Radware's DefensePro with the APSolute operating system (http://www.radware.com/Products/ApplicationNetworkSecurity/DefensePro.aspx). According to this system, the IP packets are examined for common striking features, for example identical packet sizes, source- and target ports etc. This system performs well in case of only a small number of attack sources, since attacker generate comparably high number of requests or in case of having identical attack packets.

Thus, today, there is a strong need to mitigate DDoS attacks near the target, which seems to be the only solution to the problem in the current internet infrastructure. The aim of such a protection system is to limit their destabilizing effect on the server through identifying malicious requests.

Thus, Distributed Denial of Service (DDoS) attacks are today the most destabilizing factor in the global Internet and there is a strong need for sophisticated solutions.

US-A-2006/010389 provides methods, apparatus and systems for detecting distributed denial of service (DDoS) attacks within the Internet by sampling packets at a point or points in Internet backbone connections to determine a packet metric parameter. The packet metric parameter which might comprise the volume of packets received is analysed over selected time intervals with respect to specified geographical locations in which the hosts transmitting the packets are located. The expected behaviour can be employed to identify traffic distortions revealing a DDoS attack.

Gary Pack et al. describe in "On Filtering of DDoS Attacks Based on Source Address Prefixes", SECURECOMM AND WORKSHOPS, 2006. IEEE, PI, 1 August 2006, pages 1-12 to use ACL rules that distinguish the attack packets from the legitimate traffic based on source addresses in packets.

Further related technology is described in "A Taxonomy of DDoS Attack and DDoS Defense Mechanisms" by Jelena Mircovic et al., 1 April 2004, COMPUTER COMMUNICATION REVIEW, ACM, New York, NY, US, pages 39 to 53, and in "Controlling High bandwidth Aggregates in the Network", Ratul Mahajan et al., COMPUTER COMMUNICATION REVIEW, ACM, New York, NY, US, vol. 32, no. 3, 1 July 2002, pages 62 to 73.

### Summary of the Invention

### The invention is specified in the claims.

The invention starts out from the idea of monitoring the actual requests to a computer system and preventing overload situations on the basis of a request-time and country-distribution representing a normal situation. In more detail, for each country (i.e., country specific), a request-time distribution is calculated under normal operation (i.e., not experiencing attacks). Once a DDoS attack has been detected at a certain point in time, the expected percentage of requests from each country at that time is given and compared to the actual percentage of requests from each country to determine deviations from the regular distribution. In case a significant deviation is detected for one or more countries, the number of requests from these countries are accordingly restricted to prevent an overload of the system and guarantee normal operation for requests from other countries.

According to a first aspect, the invention provides a method of protecting a computer system from attacks over a network to which the computer system is connected, the method comprising the steps of: (a) establishing, during attack-free operation of the computer system, a regular request-time distribution for all countries of origin of requests to the computer system; (b) monitoring current requests to the computer system; (c) determining the current amount of requests for all countries of origin; (d) during a detected attack comparing the current amount of requests for the countries of origin with the regular request-time distribution for at least one country of origin; and (e) restricting the number of requests from this country (e.g. traffic throttling) if it is determined as a result of step d) that the current amount of requests deviates significantly from the expected amount according to the regular request-time distribution.

The method comprises the further step of setting a threshold for the significance of the deviation determined in step d) to differentiate between acceptable request amount deviations and request amounts to be restricted. This significance threshold can be defined by a certain deviation percentage or by more meaningful statistical methods like using a multiple of the variance over a couple of observed days.

According to a preferred embodiment of the invention, step e) comprises the step of restricting the number of requests from the at least one country. The number of requests accepted in step e) correlates with the percentage of expected requests according to the regular country-time distribution for this time interval. Alternatively, step e) comprises limiting the bandwidth of the computer system available for the at least one country. Thus, certain requests or sender are not completely blocked. Rather, the number of accepted requests or the provided bandwidth for a particular sender is throttled, i.e. some requests are delayed or even denied. Technically, this corresponds to an artificial limitation of the bandwidth available for this particular sender by queuing or dropping IP packets, also known as bandwidth throttling, traffic shaping or policing.

According to one embodiment of the invention, the regular request-time-distribution for countries is established according to step a) by monitoring requests during a period of time and combining them for time or time intervals (preferable size of 15-120 minutes) of receipt of the requests and specific for each country. Alternatively, the regular request-time-distribution for at least one country is established by approximating a regular request-time-distribution from a comparable computer system with respect to user behaviour and time zone. This is advantageous if comparable computer systems are available because then no training or learning period is required. As a further alternative, the regular request-time-distribution for a country is established by extrapolating the request-time-distribution from a comparable country. This is advantageous if for a country there is not sufficient data, i.e. requests available to establish a reliable request-time distribution. It is encompassed by the invention that the different methods of establishing a request-time distribution for a plurality of countries are combined, i.e. that for individual countries alternative methods are used to obtain the distribution.

A request within the meaning of the invention is preferably an IP packet, an e-mail, a DNS request, a FTP download, a VoIP call, or a HTTP request.

It is a preferred feature of the invention that it also protects from attacks on an application level.

According to a second aspect, the invention provides a system according to claim 10.

### Brief Description of the Drawings

Preferred embodiments of the invention are described in more detail below with reference to the attached drawings, which are by way of example only.
Fig. 1 shows a data flow diagram according to a preferred embodiment of the invention; and
Fig. 2 shows an example for a request-time distribution for various countries.

### Detailed Description

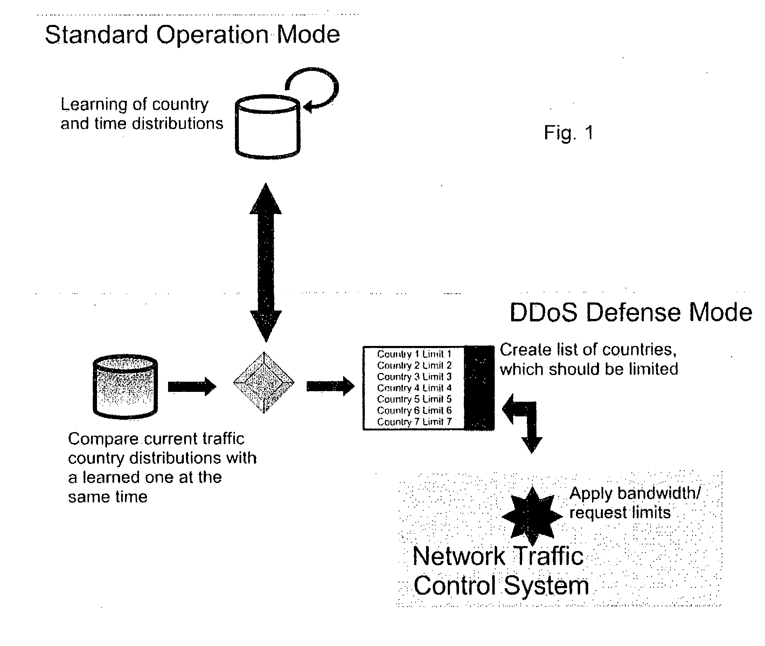

Fig. 1 shows a data flow diagram according to a preferred embodiment of the invention. As shown in Fig. 1, during normal use of the computer system, i.e. without experiencing any attack, the system undergoes a learning process to learn regular country and time distributions. Once an attack takes place, the current data traffic is monitored and the current distribution with respect to countries and time (day and time) is compared with the regular distribution. According to the preferred embodiment of Fig. 1, a restriction list is automatically determined for all countries having an excessively high number of request, so as to finally differentiate between acceptable requests and requests to be rejected.

According to the invention, certain requests or sender or countries are not completely blocked if they are determined as being abnormal. Rather, the number of accepted requests from a particular sender or country is reduced/restricted, i.e. some requests from a sender are accepted and some are rejected. This corresponds to an artificial limitation of the bandwidth available for this particular country. Thus, the number of request or packets to be rejected inversely correlates with number of expected request at the given time and for the given sender or country. For example, no requests or packets are rejected from sender whose requests meet the, i.e. do not deviate from, the regular request-time-distribution. In contrast, a large number of request is rejected from countries send an unexpectedly high number of requests compared to the regular distribution for the given time and country. The overall number of requests to be rejected depends on the server load or the bandwidth of the computer system so that an overload is prevented.

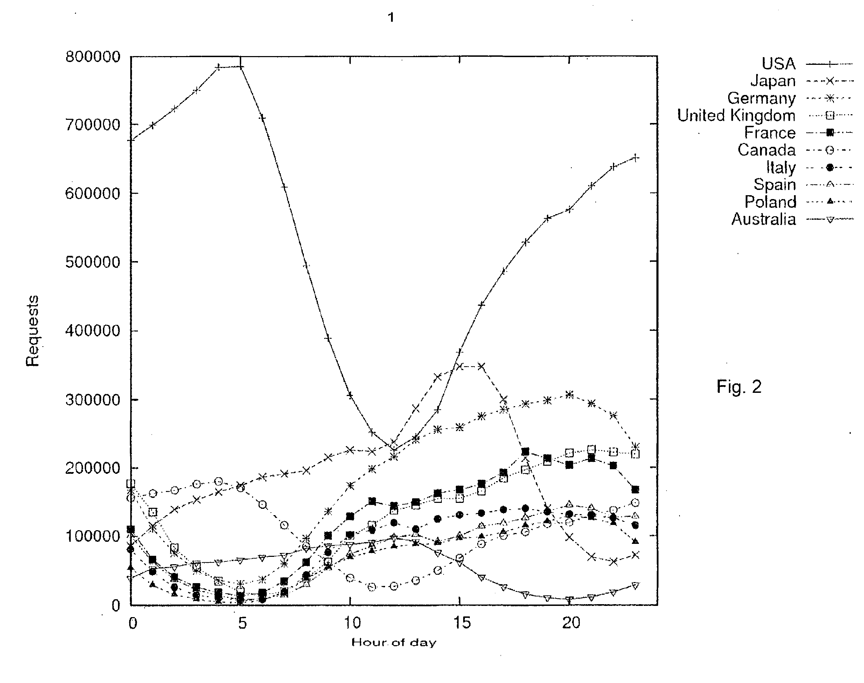

Fig. 2 shows an example of a regular request-time-distribution for various countries. Due to the different time zones all around the world, the maxima and minima occur at different times. Fig. 2 shows only 10 selected countries for illustration, whereas the invention itself uses all available countries worldwide.

The invention will now be described by means of an example. During a DDoS attack at 5:00 am CEST an overload situation occurs. The computer system has a bandwidth of 1 Gbit/s. It is recognized that 99% of the requests come from a single European country. Assuming a request-time-distribution as shown in Fig. 2, at this time normally only around 3% of the requests originate from a single European country. Thus, according to the invention, the bandwidth for this particular country is limited to 30Mbit/s. Thus, the computer system is still fully available for all requests coming from other countries. User from this particular country (which are however only few anyway at this time) are likely not successful in accessing the requested computer system.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems described by the language of the claims and the equivalents thereof.

## Claims

1. Method of protecting a computer system from attacks over a network to which the computer system is connected, the method comprising the steps of:
a. establishing, during attack-free operation of the computer system, a regular request-time distribution for all countries of origin of requests to the computer system;
b. monitoring current requests to the computer system;
c. determining the current amount of requests for at least one country of origin;
d. comparing the current amount of requests for the at least one country of origin with the regular request-time distribution for the at least one country of origin; and setting a threshold to differentiate between acceptable request amount deviations and request amounts to be restricted: and
e. restricting the number of requests from this country served by the computer system if it is determined as a result of step d) that the current amount of requests deviates from the threshold during a detected DDoS attack, wherein the number of requests accepted in step e) correlates with the percentage of expected requests according to the regular country-time distribution for this time interval.

2. The method of any of any of the preceding claims, wherein step e) comprises the step of rejecting a number of requests from the at least one country.

3. The method of claim 2, wherein the number of requests accepted in step e) correlates with the percentage of expected requests according to the regular request-time distribution for this country.

4. The method of any of the preceding claims, wherein step e) comprises limiting the bandwidth of the computer system available for the at least one country.

5. The method of any of the preceding claims, wherein the regular request-time-distributions for countries are established by monitoring requests during a period of time and combining them for time or time intervals of receipt of the requests and specific for each country.

6. The method of any of the preceding claims, wherein the regular request-time-distribution for at least one country is established by approximating a regular request-time-distribution from a comparable computer system with respect to user and time zone.

7. The method of any of the preceding claims, wherein the regular request-time-distribution for a country is established by extrapolating the request-time-distribution from a comparable country.

8. The method of any of the preceding claims, wherein a request is an IP packet, an e-mail, a DNS request, a FTP download, a VoIP call, or a HTTP request.

9. The method of any of the preceding claims, wherein it protects from attacks on an application level.

10. System for protecting computer systems from attacks over a network to which the computer system is connected, the system comprising:
means for establishing, during attack-free operation of the computer system, a regular request-time distribution for all countries of origin of requests to the computer system;
means for monitoring current requests to the computer system;
means for determining the current amount of requests for countries of origin;
means for comparing the current amount of requests for at least one country of origin with the regular request-time distribution for the at least one country of origin during a detected DDoS attack, and for setting a threshold to differentiate between acceptable request amount deviations and request amounts to be restricted, and
means for restricting the number of requests from this country served by the computer system if it is determined as a result of step d) that the current amount of requests deviates from the threshod, wherein the number of requests accepted correlates with the percentage of expected requests according to the regular country-time distribution for this time interval.

## Patentansprüche

1. Verfahren zum Schutz eines Computersystems vor Angriffen über ein Netzwerk, mit dem das Computersystem verbunden ist, bestehend aus den folgenden Schritten:
a. während des angriffsfreien Betriebs des Computersystems Festlegung einer regulären Anfrage-Uhrzeit-Verteilung für alle Ursprungsländer von Anfragen an das Computersystem;
b. Überwachung aktueller Anfragen an das Computersystem;
c. Feststellung der aktuellen Anzahl an Anfragen für mindestens ein Ursprungsland;
d. Vergleich der aktuellen Menge an Anfragen für das mindestens eine Ursprungsland mit der regulären Anfrage-Uhrzeit-Verteilung für das mindestens eine Ursprungsland und Festlegung eines Grenzwerts zur Unterscheidung zwischen akzeptablen Abweichungen der Anfragemenge von zu beschränkenden Anfragemengen; und
e. Beschränkung der Zahl der Anfragen aus diesem Land, die vom Computersystem bedient werden, wenn in Ergebnis von Schritt d) festgestellt wird, dass die aktuelle Anfragenmenge während eines erkannten DDoS-Angriffs vom Grenzwert abweicht, wobei die Anzahl der in Schritt e) akzeptierten Anfragen mit dem Prozentanteil der erwarteten Anfragen nach der regulären Land-Uhrzeit-Verteilung für diesen Zeitabschnitt übereinstimmt.

2. Verfahren nach einem der vorstehenden Patentansprüche, wobei Schritt e) den Schritt einer Zurückweisung einer Anzahl von Anfragen aus dem mindestens einen Land umfasst.

3. Verfahren nach Anspruch 2, wobei die Anzahl der in Schritt e) akzeptierten Anfragen mit dem Prozentanteil erwarteter Anfragen nach der regulären Anfrage-Uhrzeit-Verteilung für dieses Land übereinstimmt.

4. Verfahren nach einem der vorstehenden Patentansprüche, wobei Schritt e) die Bandbreite des Computersystems beschränkt, die für das mindestens eine Land verfügbar ist.

5. Verfahren nach einem der vorstehenden Patentansprüche, wobei die reguläre Anfrage-Uhrzeit-Verteilung für Länder durch die Überwachung von Anfragen während eines Zeitraums und ihre Zusammenführung für den Zeitpunkt oder Zeitabschnitte des Eingangs und spezifisch für jedes Land festgestellt werden.

6. Das Arbeitsverfahren nach einem der vorstehenden Patentansprüche, wobei die reguläre Anfrage-Uhrzeit-Verteilung für mindestens ein Land durch das Abschätzen einer regulären Anfrage-Uhrzeit-Verteilung aus einem Computersystem mit Bezug auf die Nutzer- und Zeitzone festgestellt wird.

7. Verfahren nach einem der vorstehenden Patentansprüche, wobei die reguläre Anfrage-Uhrzeit-Verteilung für ein Land durch Ableitung der Anfragezeit-Verteilung von einem vergleichbaren Land festgestellt wird.

8. Verfahren nach einem der vorstehenden Patentansprüche, wobei eine Anfrage ein IP-Paket, eine E-Mail, eine DNS-Anfrage, ein FTP-Download, ein VolP-Anruf oder eine HTTP-Anfrage ist.

9. Verfahren nach einem der vorstehenden Patentansprüche, wobei dieses auf Anwendungsebene vor Angriffen schützt.

10. System zum Schutz eines Computersystems vor Angriffen über ein Netzwerk, mit dem das Computersystem verbunden ist, bestehend aus:
während des angriffsfreien Betriebs des Computersystems Mittel zur Festlegung einer regulären Anfrage-Uhrzeit-Verteilung für alle Ursprungsländer von Anfragen an das Computersystem;
Mittel zur Überwachung aktueller Anfragen an das Computersystem;
Mittel zur Feststellung der aktuellen Anzahl an Anfragen für Ursprungsländer;
Mittel zum Vergleich der aktuellen Menge an Anfragen für das mindestens eine Ursprungsland mit der regulären Anfrage-Uhrzeit-Verteilung für das mindestens eine Ursprungsland während eines erkannten DDoS-Angriffs und zur Festlegung eines Grenzwerts zur Unterscheidung zwischen akzeptablen Abweichungen der Anfragemenge von zu beschränkenden Anfragemengen, und
Mittel zur Beschränkung der Zahl der Anfragen aus diesem Land, die vom Computersystem bedient werden, wenn in Ergebnis von Schritt d) festgestellt wird, dass die aktuelle Anfragemenge vom Grenzwert abweicht, wobei die Anzahl der akzeptierten Anfragen dem Prozentanteil der nach der regulären Land-Uhrzeit-Verteilung für diesen Zeitabschnitt erwarteten Anfragen entspricht.

## Revendications

1. Procédé de protection d'un système informatique contre les attaques sur un réseau auquel le système informatique est connecté, le procédé comprenant les étapes consistant à :
a. établir, pendant un fonctionnement sans attaque du système informatique, une distribution normale requête-temps pour tous les pays d'origine des requêtes adressées au système informatique ;
b. surveiller les requêtes actuelles adressées au système informatique ;
c. déterminer la quantité actuelle de requêtes pour au moins un pays d'origine ;
d. comparer la quantité actuelle de requêtes pour le au moins un pays d'origine à la distribution normale requête-temps pour le au moins un pays d'origine, et fixer un seuil pour distinguer les écarts acceptables de quantités de requêtes et les quantités de requêtes devant être limitées ; et
e. limiter le nombre de requêtes émanant de ce pays desservies par le système informatique, s'il est déterminé à la suite de l'étape d) que la quantité actuelle des requêtes s'écarte du seuil lors d'une attaque par DDoS détectée, le nombre de requêtes acceptées à l'étape e) correspondant au pourcentage de requêtes attendues selon la distribution normale pays-temps pour cet intervalle de temps.

2. Procédé selon l'une quelconque des revendications précédentes, dans lequel l'étape e) comprend l'étape de rejet d'un certain nombre de requêtes en provenance du au moins un pays.

3. Procédé selon la revendication 2, dans lequel le nombre de requêtes acceptées à l'étape e) correspond au pourcentage de requêtes attendues selon la distribution normale requête-temps pour ce pays.

4. Procédé selon l'une quelconque des revendications précédentes, dans lequel l'étape e) comprend la limitation de la bande passante du système informatique disponible pour le au moins un pays.

5. Procédé selon l'une quelconque des revendications précédentes, dans lequel les distributions normales requête-temps pour les pays sont établies en surveillant les requêtes au cours d'une période de temps et en les combinant pour le temps ou les intervalles de temps de réception des requêtes et spécifiquement pour chaque pays.

6. Procédé selon l'une quelconque des revendications précédentes, dans lequel la distribution normale requête-temps pour au moins un pays est établie en approximant une distribution normale requête-temps d'un système informatique comparable par rapport à la zone utilisateur et au fuseau horaire.

7. Procédé selon l'une quelconque des revendications précédentes, dans lequel la distribution normale requête-temps pour un pays est établie en extrapolant la distribution requête-temps d'un pays comparable.

8. Procédé selon l'une quelconque des revendications précédentes, dans lequel une requête est un paquet IP, un e-mail, une requête DNS, un téléchargement FTP, un appel VoIP ou une requête HTTP.

9. Procédé selon l'une quelconque des revendications précédentes, dans lequel il protège contre les attaques au niveau application.

10. Système de protection de systèmes informatiques contre les attaques sur un réseau auquel le système informatique est connecté, le système comprenant :
des moyens pour établir, pendant un fonctionnement sans attaque du système informatique, une distribution normale requête-temps pour tous les pays d'origine des requêtes adressées au système informatique ;
des moyens pour surveiller les requêtes actuelles adressées au système informatique ;
des moyens pour déterminer la quantité actuelle de requêtes pour les pays d'origine ;
des moyens pour comparer la quantité actuelle de requêtes pour au moins un pays d'origine à la distribution normale requête-temps pour le au moins un pays d'origine lors d'une attaque DDoS détectée, et pour fixer un seuil pour distinguer les écarts acceptables de quantités de requêtes et les quantités de requêtes devant être limitées ; et
des moyens pour limiter le nombre de requêtes émanant de ce pays desservies par le système informatique, s'il est déterminé à la suite de l'étape d) que la quantité actuelle des requêtes s'écarte du seuil, le nombre de requêtes acceptées correspondant au pourcentage de requêtes attendues selon la distribution normale pays-temps pour cet intervalle de temps.
